# EUROPÄISCHE PATENTSCHRIFT

(11) **EP 1 899 613 B1**
(45) Veröffentlichungstag und Bekanntmachung des Hinweises auf die Patenterteilung: **12.05.2010**
(21) Anmeldenummer: 07724439.0
(22) Anmeldetag: 20.04.2007
(51) Int. Cl.: F16B 5/02, F16B 25/00

(54) **SCHRAUBANKER**
SCREW ANCHOR
VIS D'ANCRAGE

(30) Priorität: 24.05.2006 DE 102006024440
(43) Veröffentlichungstag der Anmeldung: 19.03.2008
(73) Patentinhaber: Ludwig Hettich & Co., 78713 Schramberg-Sulgen (DE)
(72) Erfinder: HETTICH, Ulrich, 78713 Schramberg (DE)
(74) Vertreter: Liesegang, Roland
(86) Internationale Anmeldenummer: PCT/EP2007/003503
(87) Internationale Veröffentlichungsnummer: WO 2007/134681

(56) Entgegenhaltungen:
- EP-A1- 0 801 233
- EP-B1- 0 984 177
- DE-B4- 19 705 202
- DE-U1- 9 100 658
- US-A- 3 256 661

## Beschreibung

Die Erfindung betrifft einen Schraubanker zum Befestigen von Holzbauteilen auf Beton oder Mauerwerk mit den Merkmalen des Oberbegriffs des Anspruchs 1, die aus der EP 0 801 233 bekannt sind.

Im Stand der Technik ist es bekannt, zur Befestigung von Holzbauteilen auf Beton oder Mauerwerk Anker zu verwenden, welche die Lasten des Holzbauteils auf den Beton über Wirkmechanismen übertragen, die allgemein als "Verbund", "Hinterschnitt", "Spreizkegel" und "Gewinde" bekannt sind. Ein Verbund-Anker ist im wesentlichen ein Stahlteil, das in den Beton eingeklebt wird, während die Verbindung mit dem Holzbauteil in der Regel über einen Kopf oder eine Mutter erfolgt. Eine Lastübertragung über Hinterschnitt bezeichnet das Vorsehen eines geometrischen Hinterschnitts in dem Beton, der über ein Bohrverfahren oder durch den Anker selbst erzeugt wird, wobei ein Spreizelement in diesen Hinterschnitt eingesetzt wird, um Zuglasten des Ankers zu übertragen. Ein Spreizkegel-Anker basiert auf einem ähnlichen Prinzip zur Übertragung von Zuglasten, wobei bei einem solchen Anker der Spreizelement direkt in den Anker integriert ist. Ein Schraubanker schließlich hat einen Gewindeabschnitt mit einem Betongewinde zum direkten Einschrauben in Beton. An diesen Gewindeabschnitt schließt sich ein gewindeloser Schaft an, der das an der Betonoberfläche aufliegende Holzbauteil durchsetzt und an einem Schraubkopf endet, welcher in eingeschraubtem Zustand des Schraubankers mit seiner Unterseite an der Oberfläche des Holzbauteils anliegt.

Die Übertragung der Zuglast von dem Holzbauteil auf den Anker erfolgt über dessen Kopfauflage, die Übertragung der Querlasten erfolgt über Lochleibung bzw. Pressung entlang des glatten Schaftes des Ankers in dem Holzbauteil.

Um die von dem Anker aufnehmbare Zugbelastung, welche auf das Holzbauteil wirkt, zu erhöhen, werden im Stand der Technik zwischen dem Kopf des Ankers und dem Holzbauteil Metallscheiben eingefügt. Um das Zuglastpotential des Ankers, das sich aus dessen Verankerung im Beton ergibt, auszuschöpfen, sind jedoch relativ große und dicke Metallscheiben erforderlich, um eine entsprechend große Zuglast auf das Holzbauteil zu übertragen. Wird beispielsweise ein Anker mit einem Durchmesser von 12 mm verwendet, so könnte selbst bei Einsatz einer Metallscheibe mit einem Durchmesser von 30 mm und einer Dicke von 4 mm die Gefahr bestehen, dass die Scheibe bei Zuglasten, denen die Verankerung des Ankers im Beton durchaus standhielte, durchbiegt.

Die Übertragung der Querlasten auf den Anker wird maßgeblich durch die Biegebeanspruchung des Ankers aufgrund dieser Querlasten begrenzt. Diese Biegebeanspruchung, die sich bei einer Belastung des Holzbauteils parallel zur Betonwand oder dem Mauerwerk ergibt, nimmt mit zunehmender Holzbauteildicke zu, bzw. die zulässige Querbelastung der Verbindung reduziert sich mit zunehmender Holzbauteildicke. Es gilt, dass der Hebelarm für die Querkraftübertragung der halben Bauteildicke entspricht. Bei üblichen Holzbauteildicken von bis zu 240 mm und mehr ist daher der Hebelarm, entsprechend der halben Bauteildicke, so groß, dass übliche Anker die zu erwartenden Querkräfte ohne weitere Vorkehrungen in der Regel nicht aufnehmen können. Um den Anker von der Biegebelastung zu entlasten, sind im Stand der Technik sogenannte "Dübel besonderer Bauart" auf der Seite des Holzbauteils, die dem Beton oder Mauerwerk zugewandt ist, in das Holzbauteil eingebracht. Dadurch wird sichergestellt, dass die Querlasten in der Trennfuge zwischen Beton und Holzbauteil in den Teil des Ankers eingeleitet werden, der in dem Beton verankert ist, wodurch der Anker insgesamt nicht auf Biegung belastet wird. Unter "Dübel besonderer Art" sind in der Regel scheibenförmige, gezackte Stahlteile mit Bohrung zu verstehen, die in das Holzbauteil eingeschlagen werden.

Eine weitere im Stand der Technik bekannte Möglichkeit zur Befestigung von Holzbauteilen auf Beton oder Mauerwerk sind außen am Beton angebrachte Verbinder aus Stahl, die im Beton mit Ankern und im Holz mit Nägeln oder Schrauben befestigt werden. Nachteil dieser Verbindungen sind der hohe Montageaufwand und eine optisch wenig ansprechende Ausführung.

Die US 6 022 177 A offenbart einen Abstandsschraube zum Befestigen eines Bauteils mit bestimmtem Abstand an einer Holzunterlage, die zwei von einem gewindelosen Schaftabschnitt getrennte Gewindeabschnitte mit prinzipiell gleichem Gewinde aufweist. Das Gewinde des kopfnahen Gewindeabschnitts ist mit Schlitzen zum Erzeugen eines definierten Einschraubwiderstandes versehen und die Gewindesteigungen der beiden Gewinde können gleich oder unterschiedlich sein.

Aus der DE 203 19 768 U1 ist eine Schraube zum abstandslosen Befestigen von Holzbauteilen an einem Holzunterbau mit zwei Gewindeabschnitten bekannt, die durch einen gewindelosen Schaftabschnitt getrennt sind. Das Gewinde des kopfnahen Gewindeabschnitts hat deutlich geringere Steigung als der Gewindeabschnitt, der in die Holzunterlage eindringt, wobei eine möglichst große Differenz der Gewindesteigungen als vorteilhaft herausgestellt ist. Die Gewinde der beiden Gewindeabschnitte haben zumindest annähernd gleichen Außendurchmesser.

Die EP 0 984 177 B1 offenbart eine Holz-Verbundschraube mit einem Holz-Gewindeabschnitt und einem Beton-Einbettungsabschnitt.

Die DE 197 05 202 B4 offenbart eine Holz-Beton-Justierschraube mit einem BetonGewindeabschnitt und einem Holzteil mit Rückhaltevorsprüngen.

Die US 3 256 661 A offenbart eine Holz-Betonschraube mit einem Holz-Gewindeabschnitt zum Einschrauben in einen Dübel.

Der Erfindung liegt die Aufgabe zugrunde, einen Schraubanker der eingangs beschriebenen Art zu schaffen, der weniger Teile hat als die bekannten Anker und den hohen Anforderungen bezüglich Zug-, Biege- und Querbelastbarkeit besser entspricht als bekannte Anker.

Zur Lösung dieser Aufgabe ist ein Schraubanker nach Patentanspruch 1 vorgesehen. Vorteilhafte Ausgestaltungen der Erfindung sind in den Unteransprüchen angegeben.

Bei dem Schraubanker nach der Erfindung kann sowohl auf die Scheibe unter der Kopfauflage, als auch auf die Verwendung von "Dübeln besonderer Bauart" verzichtet werden. Gleichzeitig ist eine deutliche Steigerung der Zug- und Quertragfähigkeit der Verbindung gegeben. Der Schraubanker besteht nur aus einem Teil und ist einfach herstellbar.

Die Erfindung ist im folgenden anhand schematischer Zeichnungen an einem Ausführungsbeispiel mit weiteren Einzelheiten näher erläutert. Es zeigen:
- Fig. 1: eine Seitenansicht eines Schraubankers gemäß der Erfindung;
- Fig. 2, 3 und: 4 Teilschnitte nach den Linien II-II; III-III und IV-IV in Fig. 1;
- Fig. 5 und 6: Kopfansichten zweier unterschiedlicher Ausführungen eines Schraubankers nach der Erfindung; und
- Fig. 7: eine perspektivische Ansicht eines Schraubankers gemäß der Erfindung.

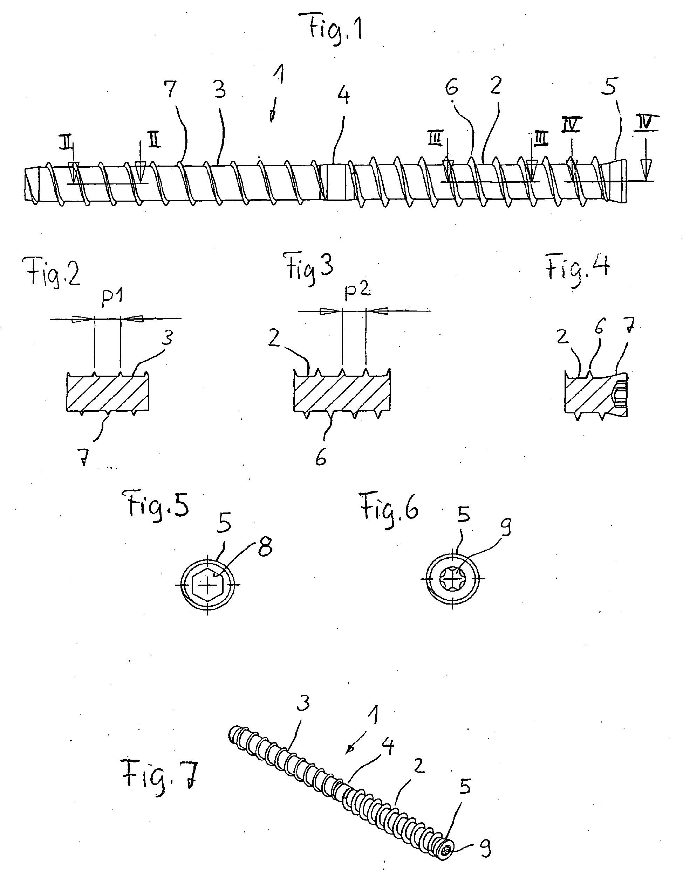

Eine Ausführung eines Schraubankers gemäß der Erfindung ist in den Figuren gezeigt. Der Schraubanker 1 hat einen Holzgewindeabschnitt 2 und einen Betongewindeabschnitt 3, die über einen gewindelosen Schaftabschnitt 4 miteinander verbunden sind. Dieser Schaftabschnitt 4 hat etwas größeren Durchmesser als der Kerndurchmesser beider Gewindeabschnitte 2 und 3. Das Gewinde 6 auf dem Holzgewindeabschnitt ist ein übliches Holzschraubengewinde mit einer Steigung p2, wie in Fig. 3 dargestellt. Das Gewinde 7 auf dem Betongewindeabschnitt 3 ist zum direkten Einschrauben des Schraubankers in Beton ausgelegt, beispielsweise gemäß EP 0 623 759 B1 oder EP 1 127 222 B1.

Der Schraubanker hat an seinem freien Ende einen konischen Kopfabschnitt 5 mit kleinem Konuswinkel, so dass sich der Schraubanker beim Eindrehen in das Holz einzieht. In den Kopfabschnitt 5 ist eine Ausnehmung in Gestalt eines Innensechskants 8 (Fig. 5) oder eines Innensechsrunds (Fig. 6) für einen entsprechenden Schraubendreher vorgesehen.

Diese Antriebe sind beispielhaft, und es können noch andere, im Stand der Technik bekannte Innenantriebe vorgesehen sein.

Das Besondere an dem erfindungsgemäßen Schraubanker ist, dass er im Durchsteckverfahren und vollständig im Holzbauteil eingelassen gesetzt werden kann. Die Steigung p2 im Holzgewindeabschnitt 2 ist etwas kleiner als die Steigung p1 im Betongewindeabschnitt. Durch die etwas kleinere Steigung wird sichergestellt, dass das Holzbauteil an die Betonoberfläche angepresst wird.

Vorzugsweise ist der Durchmesser des Holzschraubengewindes 6 größer als der Durchmesser des Betonschraubengewindes 7. Dadurch ergibt sich eine höhere Auszugslast des erfindungsgemäßen Schraubankers im Holzbauteil.

Die Steigerung der Zugbelastbarkeit des Ankers im Vergleich zum Stand der Technik ergibt sich aus der höheren Zugtragfähigkeit des Holzgewindes gegenüber der Tragfähigkeit des Kopfdurchzugs bzw. der Kopfauflage der bekannten Anker. Ein weiterer Vorteil ist, dass der erfindungsgemäße Schraubanker in das Holzbauteil eingelassen sein kann; d.h. er muß nicht so lang sein wie die Dicke des Holzbauteils. Dadurch ist der Schraubanker vielseitiger einsetzbar.

Die Steigerung der Querbelastbarkeit ergibt sich maßgeblich aus der deutlich kürzeren Baulänge im Vergleich zu bekannten Ankern, wodurch die Biegebelastung auf den Anker insgesamt stark reduziert wird. Die erfindungsgemäßen Schraubanker können kürzer als bekannte Anker gemacht werden, weil die Kopfauflage nicht notwendig zum Aufnehmen von Querlasten ist und der Kopf somit in dem Holzbauteil versenkt werden kann. Die kürzere Baulänge bei gleicher Zugtragfähigkeit wird ermöglicht durch die erfindungsgemäße Bauweise mit Doppelgewinde. Über die Einbettungslänge des Ankers im Holzbauteil kann ferner das Verhältnis zwischen zulässiger Querlast und zulässiger Zuglast der Verbindung beeinflusst werden. Es sei beispielsweise ein erfindungsgemäßer Anker mit einem Durchmesser von 12 mm betrachtet. Ein solcher Anker kann bei einer Länge von 60 mm eine theoretisch zulässige Zuglast von ungefähr 4,2 kN und eine Querkraft von ungefähr 1,9 kN aufnehmen. Bei einer verringerten Länge von 40 mm und im übrigen gleicher Bauweise reduziert sich die theoretisch zulässige Zuglast auf ungefähr 2,8 kN, während sich die zulässige Querkraft auf ungefähr 2,4 kN erhöht. Die in diesem Beispiel angegebenen Zahlen dienen zur Illustrierung des Prinzips der Erfindung, wobei nicht ausgeschlossen werden kann, dass sich abhängig von der genauen Ausführung des erfindungsgemäßen Ankers Abweichungen hiervon ergeben.

Betrachtet man im Vergleich hierzu einen aus dem Stand der Technik bekannten Anker gleicher Größe (12mm Durchmesser), der in Verbindung mit einem Hölzbauteil "üblicher" Dicke verwendet wird, so ergibt sich bei einem Holzbauteil von z.B. 120 mm Dicke eine zulässige Quertragfähigkeit des Ankers von 1,1 kN und bei einer Holzbauteildicke von 240 mm eine zulässige Quertragfähigkeit von 0,6 kN. Die geringere Quertragfähigkeit ergibt sich maßgeblich aus der größeren Baulänge der Anker des Standes der Technik, die notwendig ist, weil bei diesen Ankern die Querlast maßgeblich durch die Kopfauflage aufgenommen wird.

## Patentansprüche

1. Schraubanker zum Befestigen von Holzbauteilen auf Beton oder Mauerwerk umfassend einen Schaft (1) mit
- einem ersten Gewindeabschnitt (2) mit einem Holzschraubengewinde (6) zum Einschrauben in Holz und
- einem zweiten Gewindeabschnitt (3) mit einem Betonschraubengewinde (7) zum Einschrauben in Beton, wobei der Durchmesser des Holzschraubengewindes (6) größer ist als der Durchmesser des Betonschraubengewindes (7), **dadurch gekennzeichnet, dass**
- das Holzschraubengewinde (6) eine etwas geringere Steigung (p2) als die Steigung (p1) des Betongewindes (7) hat, so dass in eingeschraubtem Zustand das Holzbauteil an die Betonoberfläche angepresst ist.

2. Schraubanker nach Anspruch 1, **dadurch gekennzeichnet, dass** zwischen den beiden Gewindeabschnitten (2, 3) ein kurzer, gewindeloser Schaftabschnitt (4) vorgesehen ist, der größeren Durchmesser als die Kerndurchmesser der beiden Gewindeabschnitte hat und eine Trennfuge zwischen Holzbauteil und Beton überbrückt.

3. Schraubanker nach Anspruch 1 oder 2, **dadurch gekennzeichnet, dass** am freien Ende des Holzgewindeabschnittes (2) ein Kopfabschnitt (5) vorgesehen ist, der eine Ausnehmung zum Aufnehmen eines Werkzeuges zum Ein- und Ausdrehen des Schraubankers hat.

4. Schraubanker nach Anspruch 3, **dadurch gekennzeichnet, dass** die Ausnehmung ein Innensechskant (8) ist.

5. Schraubanker nach Anspruch 4, **dadurch gekennzeichnet, dass** die Ausnehmung ein Innensechsrund (9) ist.

6. Schraubanker nach einem der Ansprüche 3 bis 5, **dadurch gekennzeichnet, dass** der Kopfabschnitt (5) kegelstumpfförmig mit kleinem Kegelwinkel ausgebildet ist.

7. Schraubanker nach einem der Ansprüche 1 bis 6, **dadurch gekennzeichnet, dass** die Steigung (p2) des Holzschraubengewindes sich zur Steigung (p1) des Betonschraubengewindes etwa wie 3,4 : 3,5 verhält.

## Claims

1. Screw anchor for fastening wooden construction parts on concrete or masonry, com - prising a shaft (1) having
- a first threaded portion (2) with a wood screw thread (6) to be screwed into wood and
- a second threaded portion (3) with a concrete screw thread (7) to be screwed into concrete, the diameter of the wood screw thread (6) being greater than the diameter of the concrete screw thread (7), **characterized in that**
- the wood screw thread (6) has a somewhat smaller pitch (p2) than the pitch (p1) of the concrete thread (7) so that, in screwed-in state, the wooden construction part is pressed against the concrete surface.

2. Screw anchor as claimed in claim 1, **characterized in that** between the two threaded portions (2, 3) a threadless short shaft portion (4) is provided, which has a diameter greater than the core diameters of the two threaded portions and bridges a gap separating the wooden construction part and the concrete.

3. Screw anchor as claimed in claim 1 or 2, **characterized in that** a head portion (5) provided at the free end of the threaded portion (2) for wood is formed with a recess to receive a tool for screwing the screw anchor in and out.

4. Screw anchor as claimed in claim 3, **characterized in that** the recess is a hexagonal recess (8).

5. Screw anchor as claimed in claim 4, **characterized in that** the recess is a hexagon round recess (9).

6. Screw anchor as claimed in any one of claims 3 to 5, **characterized in that** the head portion (5) is shaped like a truncated cone having a small cone angle.

7. Screw anchor as claimed in any one of claims 1 to 6, **characterized in that** the ratio of the pitch (p2) of the wood screw thread to the pitch (p1) of the concrete screw thread is approximately equal to 3.4 : 3.5.

## Revendications

1. Vis d'ancrage pour la fixation de composants en bois sur du béton ou un ouvrage de maçonnerie comportant une tige (1) avec
- une première partie filetée (2) avec un filetage de vis à bois (6) pour le vissage dans le bois et
- une seconde partie filetée (3) avec un filetage de vis à béton (7) pour le vissage dans le béton, le diamètre du filetage de vis à bois (6) étant supérieur au diamètre du filetage de vis à béton (7), **caractérisée en ce que**
le filetage de vis à bois (6) a un pas (p2) un peu plus petit que le pas (p1) du filetage de vis à béton (7) de sorte qu'à l'état vissé, le composant en bois soit pressé contre la surface en béton.

2. Vis d'ancrage selon la revendication 1, **caractérisée en ce qu'**entre les deux parties filetées (2, 3) est prévue une courte partie de tige (4) sans filetage, qui a un diamètre supérieur au diamètre de noyau des deux parties filetées et recouvre un joint de séparation entre le composant en bois et le béton.

3. Vis d'ancrage selon la revendication 1 ou 2, **caractérisée en ce que** sur l'extrémité libre de la partie filetée de la vis à bois (2) est prévue une partie de tête (5) qui a un évidement pour le logement d'un outil pour le vissage et dévissage de la vis d'ancrage.

4. Vis d'ancrage selon la revendication 3, **caractérisée en ce que** l'évidement est un six pans creux (8).

5. Vis d'ancrage selon la revendication 4, **caractérisée en ce que** l'évidement est un six lobes internes (9).

6. Vis d'ancrage selon l'une quelconque des revendications 3 à 5, **caractérisée en ce que** la partie de tête (5) est réalisée en forme de cône tronqué avec un petit angle du tronc de cône.

7. Vis d'ancrage selon l'une quelconque des revendications 1 à 6, **caractérisée en ce que** le rapport entre le pas (p2) du filetage de vis à bois et le pas (p1) du filet de vis à béton est à peu près de 3,4:3,5.
